Europäisches Patentamt

European Patent Office

Office européen des brevets

(11) Numéro de publication : **0 473 677 B1**

(12) **FASCICULE DE BREVET EUROPEEN**

(45) Date de publication du fascicule du brevet :
**16.08.95 Bulletin 95/33**

(51) Int. Cl.⁶ : **G03B 31/02,** G03B 31/04

(21) Numéro de dépôt : **90908552.4**

(22) Date de dépôt : **25.05.90**

(86) Numéro de dépôt international :
**PCT/FR90/00366**

(87) Numéro de publication internationale :
**WO 90/14614 29.11.90 Gazette 90/27**

(54) **DISPOSITIF HAUTE FIDELITE DE REPRODUCTION DU SON POUR LE CINEMA.**

(30) Priorité : **24.05.89 FR 8906807**

(43) Date de publication de la demande :
**11.03.92 Bulletin 92/11**

(45) Mention de la délivrance du brevet :
**16.08.95 Bulletin 95/33**

(84) Etats contractants désignés :
**CH DE ES GB IT LI NL**

(56) Documents cités :
**EP-A- 40 188
WO-A-85/04024
FR-A- 2 410 296
FR-A- 2 594 238
US-A- 4 506 348
EP-A 0 372 155 (Article 54(3) et (4) CBE)**

(73) Titulaire : **Digital Theater Systems, L.P.
31352 Via Colinas,
Suite 101
Westlake Village, CA 91362 (US)**

(72) Inventeur : **CHEDEVILLE, Pascal
45, rue Klock
F-92110 Clichy (FR)**
Inventeur : **KASPAR, Jean-Georges
133, rue Marceau
F-91120 Palaiseau (FR)**

(74) Mandataire : **Schmit, Christian Norbert Marie
et al
Cabinet Ballot-Schmit
7, rue Le Sueur
F-75116 Paris (FR)**

EP 0 473 677 B1

## Description

La présente invention a pour objet un dispositif haute fidélité de reproduction du son pour le cinéma. Elle a pour objet d'augmenter la qualité du son qui accompagne la projection des images de films que l'on regarde.

Actuellement les films de cinéma comportent une bande son et une bande image. La bande son est latéralement décalée sur le film par rapport à la bande image. La bande image passe par saccades, devant la lampe d'un projecteur et l'image est projetée sur un écran que les spectateurs regardent. La bande son passe devant un détecteur de son relié à une chaîne acoustique pour émettre les sons à entendre. Pour diverses raisons, dans un appareil de projection de films notamment pour des raisons de présentation par saccades des images, le lecteur de la bande son est décalé par rapport à la lampe de projection . En général le lecteur du son est placé en amont du déroulement du film. Compte tenu de ce que les films projetés comportent des images révélées par des procédés chimiques après la prise de vue, il a été mis au point un procédé de transcription du son sur la bande son qui emprunte les mêmes techniques. En conséquence, la bande son apparaît comme un canal dont une partie de la surface est noircie et dont l'autre partie est transparente. Le détecteur de son comporte dans son principe une lampe qui éclaire, par transparence ou par réflexion, la bande son en regard d'une cellule photodétectrice. L'énergie lumineuse captée par la cellule photo détectrice tient compte, à tout instant, du pourcentage de noircissement de la section illuminée correspondante de la bande.

Dans le but d'améliorer la qualité du son produit, on a même réalisé des bandes son avec deux canaux indépendants qui ont été par la suite exploités en stéréophonie. En détection stéréophonique des cellules photodétectrices détectent un signal transcrit optiquement sur chacun de ces canaux. Une cellule détectrice correspondant à la voie de droite peut détecter par exemple la luminosité qui transparaît à travers la partie droite de la bande son tandis que une cellule photo détectrice correspondant à la voie stéréophonique de gauche détecte la partie qui correspond à la partie gauche de la bande son. Ce montage présente l'intérêt que les équipements des salles de cinéma dans lesquelles une distribution du son monophonique est prévue peuvent aussi fonctionner : leur cellule photodétectrice unique détecte la partie centrale de la bande son et délivre donc un signal représentant naturellement la somme des signaux des deux voies stéréophoniques.

Dans le but d'améliorer la distribution du son, il est prévu, dans les salles qui en sont équipées, de placer trois haut-parleurs derrière l'écran, face au public et une série de petites enceintes dans la salle. Il s'agit d'un système d'encodage qui permet une simulation spatiale des sons. Compte tenu de la technologie de fabrication, en particulier du développement chimique des films, la piste optique son présente deux défauts importants. Premièrement la dynamique mesurable est faible. En effet elle est limitée à environ 40 dB alors qu'une dynamique de 90 dB serait nécessaire. En outre, la bande passante susceptible d'être passée sur chaque voie stéréophonique est faible. On admet généralement qu'une bande passante de 11 KHz est un résultat acceptable. Une bande passante de 14 KHz n'étant obtenue que d'une manière fortuite ou alors à grands frais : c'est-à-dire moins facilement reproductible dans des conditions actuelles dans toutes les salles de cinéma.

Dans la mesure du possible la modification, pour son amélioration, d'une telle chaîne de reproduction acoustique doit prendre en compte la compatibilité avec les salles existantes. En effet, pour qu'un progrès technique puisse être accepté facilement par les exploitants de salles cinéma il faut que les films puissent passer indistinctement, de la même façon, dans les salles de spectacle munies du perfectionnement et dans celles qui n'en sont pas munies. En effet, s'il faut faire une ségrégation dans l'acheminement des films qui seraient munis de dispositifs spéciaux par rapport à ceux qui n'en seraient pas pourvus de manière à produire un son meilleur, il y a de forts risques que cette tentative de perfectionner échoue du fait de la complexité de distribution qu'elle entraînerait. Néanmoins, l'invention est aussi applicable aux cas où la ou les bandes sons ont été remplacées par d'autres moyens, du fait d'une modification de la technologie.

Dans l'invention, on a eu l'idée de résoudre les problèmes de dynamique et de bande passante de la bande son des films classiques par utilisation d'un disque laser lu par un lecteur de disques laser. La technologie des disques laser a tellement évolué qu'à présent les lecteurs de disques laser sont peu onéreux. Du coup la mise en oeuvre du perfectionnement de l'invention est acceptable par tous les exploitants de salles de cinéma. Un des principes de l'invention consiste à ajouter au film un codage qui permette de synchroniser le lecteur du disque laser avec le déroulement du film.

Le document WO-A-8 504 024 concerne un enseignement dans lequel on propose de remplacer le codage son classique par un codage crypté. Des codes sont enregistrés en regard des images, et sont reliés à des adresses d'un disque laser où est stocké un son correspondant. On note en particulier dans ce document qu'il est prévu un système d'asservissement pour que le support son soit synchronisé avec le support d'image. Ceci signifie que, si jamais il y avait coupure du film, le disque laser continuerait à émettre le son correspondant à la partie coupé mais que ce son devrait être émis à une vitesse plus rapide, de manière à rattraper les effets de retards du disque laser sur le défilement d'image, effets de retards dus à la coupure du film, Ceci est du plus mauvais effet. Le document FR-A-2 594 238 propose un enseignement du même type qui conduit, en

2

particulier lorsque les coupures du film sont supérieures à quatre secondes à des désordres de diffusion.

En outre, la demande antérieure de brevet européen n 89 108 843.5, publiée comme EP-A-0 372 155, citée en vertu des articles 54(3) et (4) CBE, comme état de la technique relatif à la présente demande pour tous les états contractants désignés sauf DK, divulgue aussi un dispositif haute fidélité de reproduction du son pour le cinéma en n'utilisant que des informations inhérentes au son original porté sur la bande sonore du film pour le synchroniser avec le même son porté par un autre support , mais d'une qualité supérieure, sans ajouter d'autres moyens de synchronisation au film.

Un problème important se présente en effet lorsque le film a été coupé puis recollé. Ceci se présente si le film a subi une déchirure ou si, pour des raisons d'exploitation, le gérant de la salle de cinéma prévoit d' entrecouper le passage du film par la diffusion de messages publicitaires. La pratique actuelle des projectionnistes consiste alors à couper le film aux ciseaux, à enlever éventuellement la partie déchirée défectueuse, et à recoller les deux bouts intègres l'un contre l'autre, ou, en cas de passage de messages publicitaires, au début et à la fin de la bande publicitaire. L'utilisation d'un disque laser présente l'inconvénient que la synchronisation du lecteur de disques laser n'est pas immédiate : le lecteur met environ une seconde pour trouver le son correspondant et pour le diffuser. Le temps de montée de cette lecture avec le lecteur de disque laser provoque alors un bruit parasite ou une absence de son du plus mauvais effet. En outre, une des difficultés rencontrées provient de ce que, au moment de l'enlèvement de la partie déchirée, et du fait que le lecteur de la bande son (qui peut servir à la synchronisation) se trouve forcément décalée de la lampe de projection, il résulte une perte d'enregistrement correspondant à des images existantes et le maintien d'enregistrement correspondant à des images maintenant disparues.

Dans l'invention, on a eu l'idée de remédier à ces inconvénients en procédant de manière différente. On utilise un autre support du son, de préférence bien sûr un disque laser associé à un lecteur de disque laser. mais on effectue une lecture en avance du son à émettre. Comme on n'est pas en temps réel, le son lu est stocké dans une mémoire. Ce son stocké est lu depuis cette mémoire, et est diffusé, au moment opportun : en correspondance avec les images qui passent. Lorsqu'il apparaît une coupure dans le film, on évite de lire les parties du son préenregistrées qui correspondent aux images qui ont été enlevées du film. On saute aux parties du son suivantes. De cette façon on évite les problèmes de temps de montée de la mise en lecture du support utilisé. Ce résultat est obtenu parce que la recherche et la lecture dans la mémoire est quasiment instantanée : elle est bien plus rapide que la recherche et la lecture sur le disque laser.

Ainsi l'invention a pour objet un dispositif selon la revendication 1.

L'invention sera mieux comprise à la lecture de la description qui suit et à l'examen des figures qui l'accompagnent. Celles-ci ne sont données qu'à titre indicatif et nullement limitatif de l'invention. Les figurent montrent

- figure 1 : un dispositif haute fidélité de reproduction du son conforme à l'invention.
- figure 2 : un exemple de codage du son pour convenir à la mise en oeuvre de l'invention.

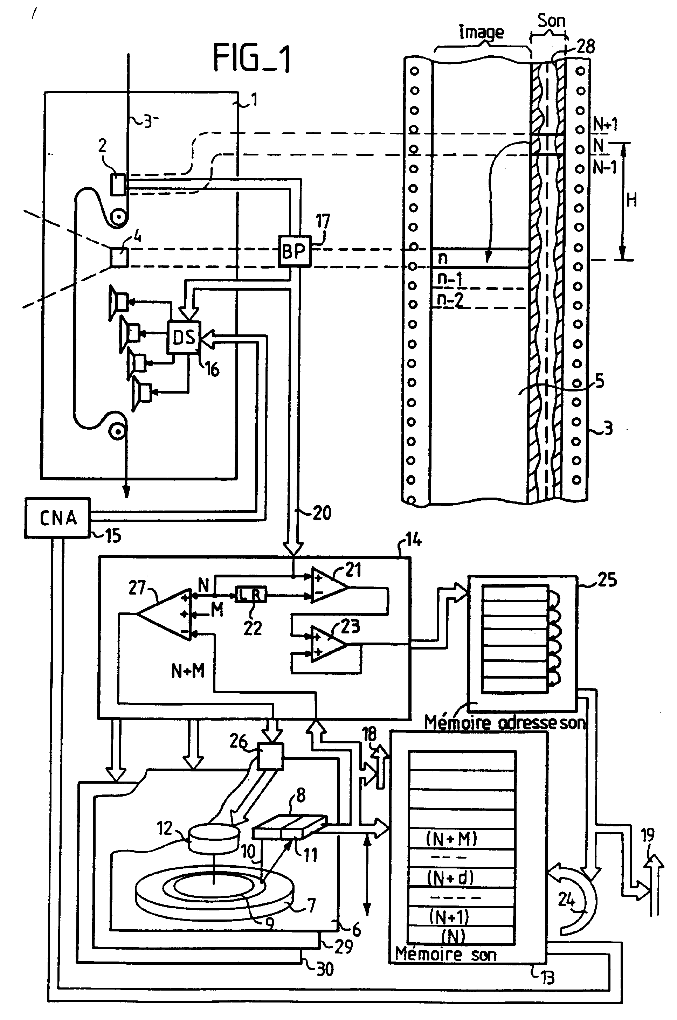

La figure 1 montre schématiquement, dans un projecteur 1 de cinéma, un détecteur 2 d'un signal codé optiquement sur une bande son 28 d'un film 3 et une lampe 4 de projection pour projeter les images contenues sur une bande image 5 du-même film. Classiquement le détecteur de la bande son est placé en amont par rapport au sens de défilement du film 3 de la lampe 4. Le décalage qui résulte de cette position en amont du détecteur 2 est noté H sur la représentation schématique du film 3. Ceci signifie que, lorsque la lampe 4 éclaire une image n de la bande image 5, le détecteur 2 détecte un son N correspondant à l'image qui passe. En pratique le décalage H correspond au temps de passage de 18 à 20 images. Il est normalisé. Ce décalage H a pour effet que si juste après le passage de l'image on a coupé le film 3 et qu'on a fait sauter un nombre "d" d'images, on aura un décalage entre la correspondance du son et de l'image. Ce décalage dure le temps de passage de cette hauteur H de film devant la lampe 4 ou devant le détecteur 2. Compte tenu d'une vitesse de passage de l'ordre de 24 images par seconde, la durée de l'effet sonore de décalage qui en résulte est de l'ordre d'un peu plus d'une demi seconde : le fait que le son "saute" est vraiment perceptible.

Dans l'invention, pour remédier à ces inconvénients, on a utilisé un autre système de lecture : par exemple de préférence un système 6 de lecture d'un disque laser 7. Cet autre système 6 comporte dans cet exemple préféré une source laser 8 éclairant une piste optique 9 du disque 7 ; le signal d'éclairement 10 est détecté par une cellule 11. Un moteur 12 entraîne le disque 7 en rotation. Le système de l'invention comporte également une mémoire 13 pour enregistrer les sons. Cette mémoire est gérée par un système de gestion 14 qui permet de lire le son en avance par rapport au passage des images correspondantes du film. En supposant par exemple qu'à un instant donné l'image projetée correspondante du film est l'image n, au lieu de lire sur le disque 7 le son N, on lit au moment du passage de l'image n le son N+M. Le système de gestion 14 provoque le stockage du son N+M dans la mémoire 13. Ce son est stocké, au moins temporairement, et il est prélevé ultérieurement. Si tout se passe bien, la durée de stockage temporaire du son N+M dans la mémoire 13 est égale au temps nécessaire pour projeter M images. Ainsi, au moment où on projette une image n+ m, on prélève de la mémoire 13 le son N + M qui y avait été stocké préalablement.

Sur un disque laser les sons sont codés numériquement sur la piste 9. En conséquence leur stockage dans des mots mémoires de la mémoire 13 ne présente pas de difficultés. Avec un tel lecteur de disque laser le son codé numériquement est ultérieurement transformé en un signal analogique par un convertisseur numérique analogique 15. la particularité de l'invention consiste juste, de ce point de vue, à introduire la mémoire 13 entre la sortie du photo-détecteur 11 et l'entrée du convertisseur numérique analogique 15. Le signal délivré par le convertisseur numérique analogique 15 est ensuite envoyé à un dispositif 16 d'effets acoustiques qui est classiquement en relations avec plusieurs voies de diffusion. La diffusion du son est ainsi exécutée de la même façon que pouvait l'être la diffusion du son dans l'état de la technique. A cette fin, un circuit d'aiguillage 17, capable de détecter la présence d'un codage de synchronisation du son à produire par le deuxième système de lecture, permet, soit de mettre en oeuvre le perfectionnement de l'invention, soit de l'ignorer, si le film 3 n'a pas été apprêté dans ce sens.

Le stockage temporaire des sons dans la mémoire 13 peut être organisé de différentes façons. Dans un exemple simple, la mémoire 13 comporte M registres à décalage qui se déversent successivement les uns dans les autres. Dans ce cas le stockage du son se fait toujours dans le premier registre et la lecture du son se fait à partir du dernier. Dans une solution préférée, on tiendra compte du fait que les sons distribués par un disque laser comportent un codage numérique renseignant non seulement sur les caractéristiques de fréquence et d'amplitude du son à produire, mais également sur l'adresse de la partie correspondante du son dans le disque laser lui-même. En pratique, plutôt que d'utiliser une mémoire à M registres à décalages qui pourrait être onéreuse, on préfère utiliser une mémoire à accès aléatoire comportant un premier pointeur d'adresse pour stocker en écriture les sons successifs dans des cases mémoires dont les adresses sont à chaque fois incrémentées. Cette mémoire à accès aléatoire comporte également un deuxième pointeur d'adresses des mots mémoire pour prélever les sons à diffuser. Les adresses des mots mémoires prélevées sont diminuées du nombre de mots mémoire correspondant aux sons stockés. Les deux pointeurs font donc évoluer, selon les flèches respectivement 18 et 19 les adresses respectivement d'écriture et de lecture dans la mémoire 13. En agissant ainsi on crée en quelque sorte une mémoire tournante, tournant sans fin sur elle même. En effet chacun des pointeurs d'adresse repart à zéro une fois qu'il a atteint l'adresse maximum de la mémoire. La mémoire 13 est alors du type premier entré premier sorti (FIFO en littérature anglo-saxonne).

Quand tout se passe bien, c'est-à-dire quand le film n'a pas été réparé, on prélève dans la mémoire 13, M "images" plus loin le son qui avait été préalablement enregistré. Par contre, les choses se passent différemment lorsque le film a été coupé. On va supposer conformément au tableau suivant, que le film a été coupé juste après l'image n

| ADRESSE SON FILM | | IMAGE | | ADRESSE SON LASER | | |
|---|---|---|---|---|---|---|
| N-1 | -H | n-1 | -H | N-1 | | |
| N-2 | -H | n-2 | -H | N-2 | | N+1 |
| N | -H | n | -H | N | | N+2 |
| N + d | -H | n +1 | -H | | | ... |
| N + d +1 | -H | n+2 | -H | N+d+1 | | N+d |
| N + d +1 | -H | n+2 | -H | N+d+1 | | |
| | | | | | | |
| N + d -1 | | n | | N+d+H-1 | | |
| N + d | | n+d | | N=d+H | | |
| N + d +1 | | n+d+1 | | | | |

TEMPS

Les cases de ce tableau s'empilent les unes au dessus des autres dans le sens inverse de l'évolution du temps. Compte tenu du décalage entre la position du lecteur 2 et de la lampe 4, la coupure du film n'apparaît pas au même moment sur les deux voies.

Ce tableau signifie que les numéros d'image ont évolué régulièrement jusqu'à n, puis ont subi un saut pour passer directement à l'image n+d (d pour déchirure) à l'image suivant l'image n. Du fait de la hauteur H entre la lecture des images et la lecture des parties correspondantes du son, on peut admettre qu'on est en présence, à l'instant où on voit l'image n+d, du son N+d en face du détecteur 2.

On admettra ici une discrétisation du son, plus propice à l'explication simple du fonctionnement de l'invention qu'à la réalité. Encore que, du fait de la numérisation du son enregistré sur un disque laser, cette discrétisation existe. Elle n'existe cependant pas si l'autre support utilisé est une bande magnétique. Dans ce cas, la mémoire 13 est une mémoire analogique par exemple une ligne à retard. En pratique "l'adresse" du son sur la bande son peut être une adresse correspondant à de nombreux mots mémoires de la mémoire, tous liés aux mêmes images.

Autant la déchirure du film a eu pour objet de faire sauter l'image de l'image n à l'image n+d , autant cette même déchirure va avoir eu pour objet de faire sauter le son du son N-H au son N+d-H. Ceci est lié uniquement à la différence de position entre la lampe 4 et le lecteur 2. Compte tenu du saut du son entre l'adresse N-H et l'adresse N+d-H, on peut utiliser ce décalage correspondant de l'adresse son pour piloter, supplémentairement, le pointeur de lecture de la mémoire 13. Dans un exemple, l'adresse du son est codee optiquement en surimpression sur la bande son. Dans un autre exemple, l'adresse du son est codée, là aussi optiquement, dans l'espace inter images du film. Dans un encore autre emple, on remplace la bande son originelle par un signal optique de synchronisation. On peut également réaliser une autre piste son de l'autre coté de la bande image. L'adresse du son est donc détectée par le détecteur 2. Ainsi, un signal adresse son 20 est envoyé dans un codeur d'adresse. En simplifiant, ce codeur d'adresse peut comporter un premier soustracteur 21 à deux entrées. Une première entrée positive reçoit une adresse son tandis qu'une deuxième entrée négative reçoit l'adresse son précédente. Pour que les adresses soient présentées ensemble l'adresse précédente passe dans une ligne à retard 22.

En temps normal, quand il n'y a pas de déchirure, les deux adresses présentent un incrément unitaire. Cet incrément est envoyé sur une première entrée d'un additionneur 23 qui reçoit, sur une deuxième entrée, son signal de sortie précédent. En conséquence l'additionneur 23 délivre maintenant une adresse incrémentée d'un cran par rapport à l'adresse qu'il produisait précédemment. Cette adresse est utilisée pour faire évoluer selon la flèche 19 le pointeur d'adresse de lecture de la mémoire 13. Lorsque l'incident se présente, le soustracteur 21 présente un incrément d au lieu d'un incrément unitaire. Cet incrément d vient d'additionner dans l'additionneur 23 à l'adresse précédente et provoque un saut de lecture 24 de la mémoire 13 de telle façon que les sons inutiles (correspondant à la partie disparue de l'image) ne soient pas diffusés. En agissant ainsi on règle les problèmes de calage de synchronisation du lecteur de disque laser.

Cependant, si on agit de cette façon, on peut provoquer de la même façon que dans l'état de la technique le décalage désagréable : en fait pendant environ une demi-seconde le son diffusé provenant du lecteur de disque laser sera un son qui ne correspond pas aux images projetée. En effet, comme le tableau précédent le montre, étant donné que l'adresse son sur le film est passée de N-H à N+d-H (et donc que cette adresse a sauté) on ne sera pas synchronisé avec le son qui lui n'a pas encore sauté étant donné qu'au moment où l'adresse son saute le signal image qui est projeté par la lampe 4 correspond aux images n-H (décalées de H en retard) ou n+1-H. C'est seulement lorsque la réparation sera passée devant la lampe 4 (n devenant n+d) que le son sera à nouveau correctement synchronisé.

Pour éviter cet effet on utilise de préférence une deuxième mémoire 25 qui reçoit les adresses son et qui les stocke temporairement pendant la durée correspondant au passage des H images. Ceci signifie que le saut 24 d'adresse n'est pas transmis immédiatement au pointeur de lecture de la mémoire 13. Il ne lui est transmis qu'avec un temps de retard égal au temps nécessaire pour que l'effet de la coupure se présente devant la lampe 4. La mémoire 25 peut être du même type que la mémoire 13 : elle peut être du type premier entré premier sorti. Elle est seulement différente de cette dernière en ce sens qu'il n'y a pas de saut de l'adresse de lecture de la mémoire quand il y a présence d'une coupure dans le film. En effet, c'est le contenu d'informations des mots mémoire stockés dans cette mémoire 25 qui est lui-même représentatif de ces sauts.

Quand on parle de saut, il est bien évident que cela ne concerne, jusqu'à maintenant, pas le saut de lecture du disque laser. Ce saut apparaîtrait dans tous les cas avec ses problèmes de temps de montée.

Il apparaît à l'évidence que si on est capable de faire sauter d images lors d'une réparation, il faut que le nombre de mots mémoire lus en avance par l'autre système de lecture soit supérieur à la longueur de la coupure la plus grande. En pratique on peut admettre qu'une coupure d'images de l'ordre de trois secondes est envisageable (ceci ne signifie pas que les images sont arrêtées d'être projetées pendant trois secondes, mais signifie qu'entre une image et la suivante il s'est passé trois secondes d'histoire qui n'ont pas été visionnées). Pour des raisons de sécurité on choisit cinq secondes, ce qui conduit à retenir pour la mémoire 13 une capacité de l'ordre de 1 mégamots de 16 bits si le son est codé sur 16 bits en sortie du lecteur de disque laser 6.

Cependant, il est possible qu'un film ait subi plusieurs déchirures de telle sorte que la disparition cumulée des images correspondantes soit bien supérieure à cinq secondes. Par exemple il peut y avoir eu jusqu'à une dizaine de coupures ce qui conduit à la disparition d'une minute d'histoire qu'il est inenvisageable de stocker par avance dans la mémoire 13. En effet ce stockage d'une minute conduirait à une capacité inacceptable pour un coût raisonnable. On tourne alors cette difficulté en utilisant l'aptitude du disque laser à être asservie en vitesse. Dans ce but on utilise par exemple l'horloge de commande 26 du lecteur de disque laser qu'on pilote en fonction d'un écart constaté entre l'adresse du son lu sur la bande son, et l'adresse du son lu sur la piste laser 9. A cette fin, l'adresse du son lu sur la bande son est introduite sur une première entrée positive d'un comparateur 27 en même temps que, sur une deuxième entrée positive de ce comparateur 27, la taille M qu'on impose comme garde à la mémoire 13. Cette taille correspond exactement à l'avance de lecture que l'on veut imposer.

Quand tout se passe bien, au moment où on lit une adresse son N sur la bande son, on lit une adresse son N+M sur la piste 9 du disque laser 7. Cette adresse son N + M de la piste laser 9 est introduite sur une troisième entrée négative du comparateur 27. Celui-ci dans ces conditions délivre un signal nul. Ce signal nul pilote l'horloge et celle-ci 26 oscille alors à sa fréquence propre. Elle pilote donc normalement le moteur 12.

Par contre, lorsque l'incident se produit : lorsque les adresses passent de N-H à N+d-H sur la bande son, le comparateur 27 délivre un signal qui n'est plus nul : il est sensiblement égal à d (au début). Ce signal d a pour effet d'accélérer la vitesse de rotation 12 du système 6, dans une gamme tolérée par ce système. Dans ces conditions la cellule détectrice 11 débite plus vite à la fois les contenus des mots mémoires à enregistrer dans la mémoire 13, ainsi que les adresses de ces mots mémoire. Etant donné que ces adresses lues s'incrémentent ainsi plus vite que celles qui sont normalement débitées par la bande son (après la déchirure), l'écart se réduit, et petit à petit le moteur 12 reprend sa vitesse normale. On a ainsi provoqué par l'accélération de l'enregistrement le rattrapage d'écart qu'il est nécessaire de maintenir entre l'écriture et la lecture de la mémoire 13. On notera que dans ce cas le "rattrapage" est même préalable au saut de lecture 24 résultant de la présence de la déchirure du film. Ceci a pour conséquence qu'en pratique la capacité de la mémoire peut devoir être telle qu'elle soit le double de la durée attendue d'une coupure. On peut évidemment éviter cette contrainte en provoquant le rattrapage ultérieurement à l'apparition de l'incident du film, tout en sachant que dans ce cas on prend le risque de ne pas être éventuellement capable d'amortir les effets de deux déchirures trop proches l'une de l'autre.

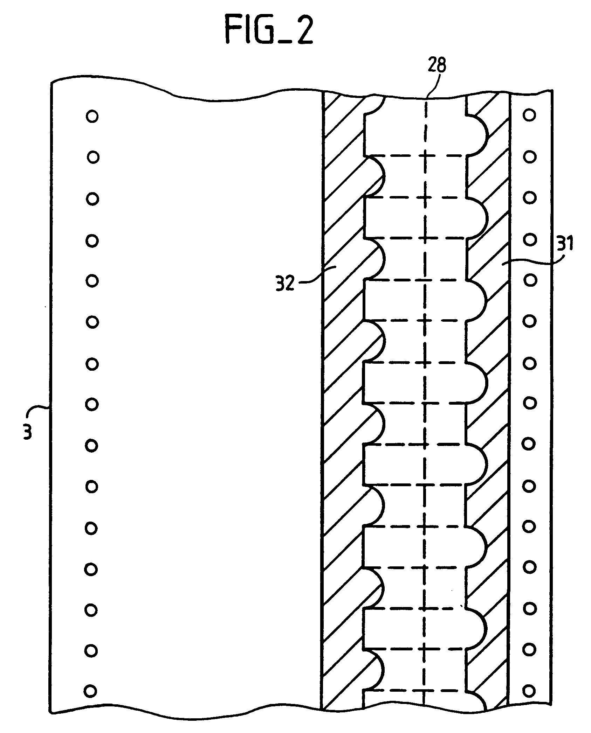

Un autre problème à résoudre consiste à créer la synchronisation du démarrage du disque laser avec le film. Dans ce but on peut créer, par exemple dans la bande son 28, un signal dont la fréquence est élevée. Sur la figure 2, une piste son 28 présente par exemple deux voies avec modulation optiques 31-32 en opposition de phase dite hors phase. Cette modulation globale est comprise entre 7 et 11KHz. Cette modulation est elle-même codée (en amplitude ou en fréquence) pour représenter les adresses des sons sur la bande son. Ces adresses sont ensuite décodées dans le circuit d'aiguillage 17. Dans ce cas le circuit 17 contient un filtre passe haut sur la voie hors phase pour extraire le signal hors phase de fréquence plus grande que 7 KHz. Le codage supplémentaire 31-32 ne remplace pas le son codé normalement sur la bande son. Il se superpose à lui: les deux peuvent coexister. Au besoin on peut envisager tout autre moyen de codage optique qui serait en relation avec le même ou un autre lecteur optique. Par exemple, on pourrait remplacer le codage par un codage supplémentaire appliqué sur une autre bande (par exemple à gauche de la bande image) et qui serait en relation avec un autre lecteur optique lui aussi. Ce dernier circuit 17 est en outre susceptible de reconnaître, dans les adresses son, quel disque laser (et quel lecteur le disque laser associé) doit être connecté à la mémoire 13. Dans ce but, la figure 1 montre trois système de lecture laser : les systèmes 6, 29 et 30. Le fait d'utiliser plusieurs systèmes peut par ailleurs être nécessaire quand la durée de la projection excède la durée son enregistrable sur un disque laser.

## Revendications

1. Dispositif (1, 6, 13, 14) haute fidélité de reproduction du son pour le cinéma en utilisant un film (3) comprenant des adresses son, son qui est lui même porté par un autre support (7), le dispositif comportant
   - un premier détecteur (2) optique pour lire un premier signal de synchronisation (20), comprenant lesdites adresses son, codé optiquement sur une bande (28) dite bande de codage-son, présente en correspondance d'une bande dite bande image (5) sur un film (3) de cinéma,
   - une chaîne acoustique (16) pour produire un son correspondant au premier signal de synchronisation (20) lu en fonction du passage de la bande codage-son (28) devant le premier détecteur (2), et
   - un système (6,14,13) de lecture pour lire un deuxième signal codé (9), porté par un autre support (7) que la bande codage-son (28), et correspondant au premier signal de synchronisation (20), caractérisé en ce qu'il comporte en outre,
   - une mémoire (13) pour stocker le deuxième signal codé (9) lu,

- un système de gestion (14) comportant des moyens pour lire le deuxième signal codé (9) sur l'autre support (7) en avance (N+M) par rapport au passage d'images (n) correspondant à ce deuxième signal codé (9),
- des moyens pour enregistrer le deuxième signal dans la mémoire (13) et pour l'y stocker,
- des moyens pour prélever le deuxième signal codé (9) de la mémoire (13),
- des moyens pour émettre (15) acoustiquement du son correspondant au deuxième signal codé (9) en retard (M) par rapport au moment de sa lecture sur l'autre support (7) et en même temps que passent les images de la bande image correspondant audit deuxième signal codé, et
- des moyens (24) pour éviter d'émettre acoustiquement la partie de ce dit son qui correspond aux images absentes à cause d'une coupure du film en fonction du premier signal de synchronisation (20) en ne prélevant pas dans la mémoire (13) le deuxième signal codé correspondant à ce dit son.

2. Dispositif selon la revendication 1 caractérisé en ce que les moyens de gestion comportent
   - des moyens (27,28) pour accélérer la lecture du deuxième signal codé sur l'autre support, en fonction de la partie non émise dudit même son.

3. Dispositif selon l'une quelconque des revendications 1 ou 2 caractérisé en ce que le système de gestion comporte
   - un premier pointeur (18) d'adresse pour orienter en entrée le stockage du deuxième signal sur des mots mémoires de la mémoire,
   - un deuxième pointeur (19) d'adresse pour désigner les mots mémoire de la mémoire dans lesquels est à prélever le deuxième signal,
   - et des moyens (25) pour décaler le deuxième pointeur d'adresse en fonction de la partie à ne pas émettre dudit même son.

4. Dispositif selon l'une quelconque des revendications 1 à 3 caractérisé en ce qu'il comporte des moyens pour lire un codage (31-32) temporel de la bande son, ce codage étant représentatif du son à émettre.

5. Dispositif selon l'une quelconque des revendications 3 ou 4 caractérisé en ce que les pointeurs comportent des compteurs, et en ce que le deuxième pointeur comporte une mémoire (25) à décalage dont le contenu des cases est chargé au fur et à mesure par des adresses correspondant au codage temporel de la bande son, et dont la lecture est différée (25) dans le temps d'une durée égale à celle séparant le passage d'une partie du film devant le premier détecteur d'une part, puis devant une lampe (4) de projection du film d'autre part.

6. Dispositif selon l'une quelconque des revendications 1 à 5 caractérisé en ce que l'autre système de lecture est un système de lecture de disque laser comportant un codeur (15) numérique analogique du signal lu.

7. Dispositif selon l'une quelconque des revendications 1 à 6 caractérisé en ce que la mémoire (13) comporte une capacité (M) supérieure ou égale à celle du son qui serait supprimé (d) du fait d'une déchirure du film.

8. Dispositif selon l'une quelconque des revendications 1 à 7 caractérisé en ce que les moyens pour lire le codage comportent des moyens de filtrage passe- haut reliés à un démodulateur dont la fréquence centrale est plus élevée que la fréquence de coupure du filtre passe haut.

9. Utilisation du dispositif selon l'une quelconque des revendications 1 à 8 dans une salle pour reproduire du son en haute fidélité.

10. Utilisation d'un disque à lecture laser en tant que ledit autre support (7) du dispositif selon l'une quelconque des revendications 6 à 8.

**Patentansprüche**

1. Vorrichtung (1, 6, 13, 14) zur Kinofilm-Tonwiedergabe in Hifi-Qualität, bei der ein Film (3) verwendet wird, der Tonadressen aufweist, wobei der Ton selbst sich auf einem anderen Tonträger (7) befindet, bestehend aus

- einem ersten optischen Detektor (2) zur Abtastung eines ersten Synchronisationssignals (20), das die genannten Tonadressen enthält und optisch auf eine Spur (28), genannt Toncodierungsspur, codiert ist, die auf einem Kinofilm (3) an eine Spur, genannt Bildspur (5), anschließt,
- einem Wiedergabegerät (16) zur Erzeugung eines Tons, der dem ersten Synchronisationssignal (20), entspricht, das in Abhängigkeit von dem Durchlauf der Toncodierungsspur (28) vor dem ersten optischen Detektor (2) abgetastet wird, und
- ein Abtastsystem (6, 14, 13) zur Abtastung eines zweiten codierten Signals (9), das sich auf einem anderen Tonträger (7) als auf der Toncodierungsspur (28) befindet und dem ersten Synchronisationssignal (20) entspricht,
  dadurch gekennzeichnet, daß sie ferner
- einen Speicher (13) zur Speicherung des abgetasteten zweiten codierten Signals (9),
- ein Steuersystem (14) mit Mitteln zum Lesen des zweiten codierten Signals (9) auf dem anderen Tonträger (7) im voraus (N+M) gegenüber dem Durchlauf von Bildern (n), die diesem zweiten codierten Signal (9) entsprechen,
- Mittel zur Aufzeichnung und zur Speicherung des zweiten Signals im Speicher (13),
- Mittel zur Entnahme des zweiten codierten Signals (9) aus dem Speicher (13),
- Mittel zur akustischen Wiedergabe (15) des Tons, der dem zweiten codierten Signal (9) entspricht, mit Verzögerung zu dem Zeitpunkt seiner Abtastung auf dem anderen Tonträger (7) und zum gleichen Zeitpunkt, zu dem die Bilder der Bildspur durchlaufen, die dem genannten zweiten codierten Signal entsprechen, und
- Mittel (24) zur Vermeidung der akustischen Wiedergabe des Abschnitts dieses genannten Tons, der den Bildern entspricht, die aufgrund eines Reparaturschnitts im Film nicht mehr vorhanden sind, in Abhängigkeit von dem ersten Synchronisationssignal (20), wobei das zweite codierte Signal, das diesem Ton entspricht, nicht aus dem Speicher (13) entnommen wird,
  aufweist.

2. Vorrichtung nach Anspruch 1,
   dadurch gekennzeichnet, daß die Steuermittel Mittel (27, 28) zum Beschleunigen der Abtastung des zweiten codierten Signals auf dem anderen Tonträger in Abhängigkeit von dem nicht wiedergegebenen Abschnitt des genannten gleichen Tons umfassen.

3. Vorrichtung nach einem der Ansprüche 1 oder 2,
   dadurch gekennzeichnet, daß das Steuersystem
   - einen ersten Adressenpointer (18), der eingangs die Speicherung des zweiten Signals nach Speicherwörtern des Speichers orientiert,
   - einen zweiten Adressenpointer (19), der die Speicherwörter des Speichers bezeichnet, aus denen das zweite Signal zu entnehmen ist,
   - und Mittel (25) zur Verschiebung des zweiten Adressenpointers in Abhängigkeit von dem nicht wiederzugebenden Abschnitt des genannten gleichen Tons
     aufweist.

4. Vorrichtung nach einem der Ansprüche 1 bis 3,
   dadurch gekennzeichnet, daß es Mittel zur Abtastung einer zeitweiligen Codierung (31-32) der Tonspur aufweist, wobei diese Codierung den wiederzugebenden Ton darstellt.

5. Vorrichtung nach einem der Ansprüche 3 oder 4,
   dadurch gekennzeichnet, daß die Pointer Zähler aufweisen und daß der zweite Pointer einen Versatzspeicher (25) aufweist, bei dem der Inhalt der Kästchen je nachdem mit Adressen geladen wird, die der zeitweiligen Codierung der Tonspur entsprechen, und bei dem das Abtasten zeitlich um eine Dauer verschoben wird (25), die gleich der Zeitdauer ist, die zwischen dem Durchlauf eines Filmabschnitts vor dem ersten Detektor einerseits und vor einer Filmprojektionslampe (4) andererseits vergeht.

6. Vorrichtung nach einem der Ansprüche 1 bis 5,
   dadurch gekennzeichnet, daß das andere Abtastsystem ein CD-Abtastsystem mit einem Digital-Analog-Codierer (15) für das abgetastete Signal ist.

7. Vorrichtung nach einem der Ansprüche 1 bis 6,
   dadurch gekennzeichnet, daß der Speicher (13) eine Kapazität (M) besitzt, die größer oder gleich groß ist wie die des Tons, der aufgrund eines Reparaturschnitts im Film weggelassen wird (d).

8. Vorrichtung nach einem der Ansprüche 1 bis 7,
dadurch gekennzeichnet, daß die Mittel zum Abtasten der Codierung Hochpaß-Filtermittel aufweisen, die mit einem Demodulator verbunden sind, dessen Bandmittenfrequenz höher ist als die Grenzfrequenz des Hochpaßfilters.

9. Verwendung der Vorrichtung nach einem der Ansprüche 1 bis 8 in einem Saal zur Tonwiedergabe in Hifi-Qualität.

10. Verwendung einer Wiedergabe-CD als der genannte andere Tonträger (7) der Vorrichtung nach einem der Ansprüche 6 bis 8.

## Claims

1. A high fidelity reproduction sound device (1,6,13,14) for cinema by using a film (3) comprising sound addresses, sound that is carried itself on another medium (7), said device comprising :
   - a first optical detector (2) for reading a first synchronization signal (20), comprising said sound addresses, that is optically encoded on a track said a sound-encoding track (28) presented in correspondence with a track said an image track (5) on the cinema film (3),
   - an audio system (16) for producing a sound corresponding to the first synchronization signal that is read as a function of the sound-encoding track (28) moving past the first detector (2), and
   - a reading system (6,14,13) for reading a second encoded signal (9) carried on a medium (7) other than the sound encoding track (28) and corresponding to the first synchronization signal (20) characterized in that it further comprises :
   - a memory (13) for storing the second encoded signal (9) as read;
   - a control system (14) comprising means for reading the second encoded signal (9) from the other medium (7) early (N+M) relative to the passage of the images (n) corresponding to this second encoded signal (9)
   - means for recording the second encoded signal in the memory (13) and for storing it therein;
   - means for reading the second encoded signal (9) from the memory (13);
   - means (15) for acoustically emitting sound corresponding to the second encoded signal (9) that is late (M) relative to the moment it is read from the other medium (7) and that occurs at the same time as that passage of the images of the image track corresponding to said second encoded signal, and
   - means (24) for avoiding to acoustically emit the portion of said sound which corresponds to images which are absent due to a cut in the film as a function of the first synchronization signal (20) without reading from the memory (13) the second encoded signal (9) corresponding to said sound.

2. A device according to claim 1, characterized in that the control means include :
   - means (27,28) for accelerating the reading of the second encoded signal on the other medium as a function of the non-emitted portion of said same sound.

3. A device according to claim 1 or 2, characterized in that the control system includes :
   - a first address pointer (18) to provide input pointing for storing the second signal in memory words of the memory;
   - a second address pointer (19) for designating memory words in the memory from which the second signal is to be read; and
   - means (25) for shifting the second address pointer as a function of the portion of said same sound that is not to be emitted.

4. A device according to any one of claims 1 to 3, characterized in that it includes means for reading time encoding (31-32) from the sound track, said time encoding being representative of the sound to be emitted.

5. A device according to one of claims 3 or 4, characterized in that the pointers include counters, and in that the second pointer includes a shift memory (25) whose contents is loaded progressively with corresponding addresses of the time encoding of the sound track, with reading therefrom being delayed (25) in time by a period of time equal to that between the passage of a portion of the film going past the first detector and then going past the lamp (4) of the film projector.

6. A device according to any one of claims 1 to 5, characterized in that the other read system is a system for reading a laser disk and including a digital-to-analog encoder (25) for the signal as read.

7. A device according to any one of claims 1 to 6, characterized in that the capacity (M) of the memory (13) is greater than or equal to the amount of sound that may be omitted (d) because of a tear in the film.

8. A device according to any one of claims 1 to 7, characterized in that the means for reading the encoding include high pass filter means connected to a demodulator having its centre frequency higher than the cutoff frequency of the high pass filter.

9. Utilisation of the device according to any one of claims 1 to 8 in a cinema for reproducing high fidelity sound.

10. Utilisation of a laser disk as said other medium (7) of the device according to any one of claims 6 to 8.

# FIG_1

# FIG_2